(19) Europäisches Patentamt
European Patent Office
Office européen des brevets

(11) **EP 3 557 523 B1**

(12) **EUROPÄISCHE PATENTSCHRIFT**

(45) Veröffentlichungstag und Bekanntmachung des Hinweises auf die Patenterteilung:
**28.07.2021 Patentblatt 2021/30**

(51) Int Cl.:
*G06T 5/00* *(2006.01)*          *G06T 5/50* *(2006.01)*
*G06T 7/80* *(2017.01)*

(21) Anmeldenummer: **18168054.7**

(22) Anmeldetag: **18.04.2018**

(54) **VERFAHREN ZUR ERZEUGUNG EINES KORREKTURMODELLS EINER KAMERA ZUR KORREKTUR EINES ABBILDUNGSFEHLERS**

METHOD FOR GENERATING A CORRECTING MODEL OF A CAMERA FOR CORRECTING AN IMAGING ERROR

PROCÉDÉ DE GÉNÉRATION D'UN MODÈLE DE CORRECTION D'UNE CAMÉRA PERMETTANT DE CORRIGER UNE ERREUR D'IMAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**23.10.2019 Patentblatt 2019/43**

(73) Patentinhaber: **B&R Industrial Automation GmbH 5142 Eggelsberg (AT)**

(72) Erfinder: **Waldl, Andreas 5142 Eggelsberg (AT)**

(74) Vertreter: **Patentanwälte Pinter & Weiss OG Prinz-Eugen-Straße 70 1040 Wien (AT)**

(56) Entgegenhaltungen:
**WO-A1-2018/050223     US-A1- 2017 070 731**

**Beschreibung**

Die Erfindung betrifft ein Verfahren zur Erzeugung eines Korrekturmodells einer Kamera zur Korrektur zumindest eines, durch eine Anzahl ausgewählter veränderlicher Kameraeinstellungen beeinflussten Abbildungsfehlers in der Bildebene der Kamera, wobei eine Mehrzahl von Merkmalen vorgesehen wird, wobei für jede der ausgewählten, den Abbildungsfehler beeinflussenden veränderlichen Kameraeinstellungen zumindest zwei definierte Einstellungsspezifikationen zur Veränderung der jeweiligen Kameraeinstellung vorgegeben werden, wobei für jede der zumindest zwei vorgegebenen Einstellungsspezifikationen von der Kamera die Mehrzahl von Merkmalen aufgenommen wird. Die Erfindung betrifft zudem eine Verwendung des Verfahrens zur Kalibrierung einer Kamera.

In der industriellen Bildverarbeitung können eine oder mehrere Bilderfassungsvorrichtungen, vorzugsweise Kameras verwendet werden, um Vision-System-Prozesse auf einem Objekt oder einer Oberfläche innerhalb einer abgebildeten Szene durchzuführen. Diese Prozesse können z.B. Inspektionsaufgaben, eine Bild- oder Symboldekodierung, die Vermessung einer Objektausrichtung, einer Objektabmessungen oder eine Vielzahl anderer Aufgaben umfassen. Üblicherweise ist es erforderlich, die Kamera zu kalibrieren, beispielsweise um es dem Bildverarbeitungssystem zu ermöglichen, Aufgaben reproduzierbar mit erhöhter Genauigkeit und erhöhter Zuverlässigkeit durchzuführen.

Ist es bei Anwendungen für die industrielle Bildverarbeitung notwendig Messergebnisse zu liefern, so ist das aufgrund von Abbildungsfehlern, die aus der Beleuchtung und/oder aus den Eigenschaften der optischen Komponenten der Kamera resultieren, nicht ohne Einbußen der Genauigkeit möglich, selbst wenn bei die Komponentenauswahl hinsichtlich des Einflusses auf Abbildungsfehler der Kamera besondere Sorgfalt gelegt wurde.

Da Abweichungen zwischen einzelnen Komponenten eines industriellen Bildverarbeitungssystems produktionstechnisch nicht immer auf ein erforderliches Maß minimiert werden können, kann es für manche Anwendungen erforderlich sein, Abbildungsfehler, die durch diese Abweichungen bedingt sind, durch nachgelagerte Korrektur auf ein Minimum zu senken.

Um eine anspruchsvolle, bildverarbeitungsbasierende Aufgabe zufriedenstellend erledigen zu können sind bekannte und reproduzierbare Eigenschaften des Bilderfassungssystems zwingend notwendig. Insbesondere wenn sich durch Tausch einzelner Komponenten, bei einer Vervielfältigung von Anwendungen an verschiedenen Orten, oder durch Veränderung bestimmter Kameraeinstellungen die Eigenschaften und/oder Randbedingungen eines Bildverarbeitungssystems ändern können, führt dies in der Regel zu Abbildungsfehlern der Kamera.

Die Abbildungsfehler können vielfältiger Natur sein. So können Inhomogenitäten bei der Ausleuchtung eines Objektes ebenso problematisch sein wie eine Vignettierung (Abschattung zum Bildrand), die durch die Optik der Kamera oder das mechanische Design verursacht wird. Auch die verwendeten Objektive sind für viele andere Abbildungsfehler verantwortlich und damit für Probleme und Abweichungen bei der nachgelagerten Bildverarbeitung. Einige Abbildungsfehler können jedoch in der Regel ohne nennenswerten Informationsverlust korrigiert werden, sofern eine ausreichende Menge an Daten für die Korrektur vorhanden sind. Während für bekannte Abbildungsfehler wie Koma, Astigmatismus, Sphärische Aberration oder Bildfeldwölbung, komplexere mathematische Methoden notwendig sind, sind Korrekturen von ebenso bekannten geometrischen Abbildungsfehlern wie z.B. der geometrischen Verzeichnung oder der chromatischen Aberration gut beherrschbar und haben eine breite Anwendung.

Wesentlichen Einfluss auf die geometrischen Abbildungsfehler haben bestimmte veränderliche Kameraeinstellungen wie beispielsweise die Brennweite, die verwendete Blende der Optik, der Fokusabstand und die Wellenlänge des zur Beleuchtung des Objekts verwendeten Lichts.

US 2017/0070731 A1 offenbart ein Kalibrierungsverfahren für eine Kamera, wobei ein Bild eines Objekts durch eine Kamera erfasst wird, daraus räumliche Parameter zwischen der Kamera und dem Objekt bestimmt werden, ein optisches Zentrum geschätzt wird, iterativ ein Satz optischer Eigenschaften basierend auf der ersten Schätzung für das optische Zentrum berechnet wird, bis die Differenz zwischen einem zuletzt berechneten Satz optischer Eigenschaften und einem zuvor berechneten Satz optischer Eigenschaften einen vorbestimmten Schwellenwert erfüllt, und die Kamera basierend auf dem besten Satz optischer Eigenschaften kalibriert wird. Betreffend die Korrektur von Abbildungsfehlern wird erwähnt, dass ein Verzeichnungs-Modell ermittelt werden kann.

WO 2018/050223 A1 offenbart ein Verfahren zum Erfassen eines bekannten Musters mit homogenen Bereichen, wie z.B. ein Schachbrett-Muster. Das Verfahren umfasst die Schritte des Aufnehmens eines Bildes des bekannten Musters und des Durchführens einer Erkennung. Die Erkennung umfasst eine anfängliche Erfassung eines ersten Bereichs des Bildes und die Erfassung eines Merkmals des bekannten Musters innerhalb eines, neben dem ersten Bereich angeordneten zweiten Bereichs des Bildes. Die anfängliche Erfassung hat den Zweck, mindestens einen Regionsparameter zu schätzen, wie beispielsweise eine Position des Bereichs des Musters oder die Ausrichtung des Bereichs oder eine Verzerrung desselben. Ausgehend davon kann der zweite Bereich ausgewählt werden, in dem ein Merkmal wie eine Ecke des Schachbretts erkennbar ist. Dieser zweite Erfassungsschritt hat den Zweck, mindestens einen Bereichsparameter zu erhalten, wie beispielsweise die Position eines Merkmals innerhalb des zweiten Bereichs.

Es ist daher die Aufgabe der Erfindung, ein Verfahren anzugeben, mit dem Abbildungsfehler in der Bildebene einer Kamera bei einer Veränderung von ausgewählten, die Abbildungsfehler beeinflussenden veränderlichen Kameraeinstellungen möglichst schnell und einfach korrigiert werden können.

Erfindungsgemäß wird die Aufgabe dadurch gelöst, dass die Mehrzahl von Merkmalen mit unterschiedlichen bekannten Merkmalspositionen im Raum vorgesehen wird, dass von der Kamera aus den aufgenommenen Merkmalen in der Bildebene Bildpositionen der Merkmale ermittelt werden, dass mittels zumindest eines bekannten mathematischen Verfahrens ein Zusammenhang zwischen den unterschiedlichen bekannten Merkmalspositionen im Raum und den korrespondierenden Bildpositionen in der Bildebene der Kamera ermittelt wird, dass daraus für jede der zumindest zwei vorgegebenen Einstellungsspezifikationen der ausgewählten veränderlichen Kameraeinstellungen Korrekturparameter zumindest eines vorgegebenen mathematischen Korrekturmodells zur Korrektur des zumindest einen Abbildungsfehlers ermittelt werden und dass das zumindest eine Korrekturmodell mit den ermittelten Korrekturparametern in der Kamera hinterlegt wird.

Vorzugsweise werden als Abbildungsfehler eine geometrische Verzeichnung und/oder eine chromatische Aberration und/oder eine Vignettierung vorgesehen. Diese Abbildungsfehler werden durch die ausgewählten veränderlichen Kameraeinstellungen der Kamera beeinflusst und können mit dem gegenständlichen Verfahren korrigiert werden.

Vorteilhafterweise werden als den Abbildungsfehler beeinflussende veränderliche Kameraeinstellungen eine Brennweite und/oder ein Fokusabstand und/oder eine Blende und oder eine Wellenlänge eines Lichts L einer Beleuchtung der Merkmale vorgesehen. Damit werden die wichtigsten veränderlichen Kameraeinstellungen berücksichtigt, die einen oder mehrere Abbildungsfehler beeinflussen.

Es ist vorteilhaft, wenn für alle Merkmale ein gleicher Kameraabstand von der Bildebene vorgesehen wird, wobei die Merkmale bevorzugt auf einer zweidimensionalen Kalibrierplatte als aktive oder passive, vorzugsweise kreisförmige Merkmale angeordnet werden. Dabei ist es vorteilhaft, wenn der Kameraabstand der Kalibrierplatte zumindest zweimal verändert wird, wobei bei jedem Kameraabstand die Merkmale für jede der zumindest zwei vorgegebenen Einstellungsspezifikationen von der Kamera aufgenommen werden. Durch Verwendung einer zweidimensionalen Kalibrierplatte mit vorzugsweise veränderlichem Kameraabstand wird die praktische Anwendung des Verfahrens erleichtert.

Gemäß einer weiteren bevorzugten Ausführungsform werden zumindest zwei Merkmale mit verschiedenem Kameraabstand vorgesehen, wobei die Merkmale vorzugsweise auf einem dreidimensionalen Kalibrierobjekt als aktive oder passive, vorzugsweise kreisförmige Merkmale angeordnet werden. Dadurch kann auch ein dreidimensionales Kalibrierobjekt verwendet werden, auf dem die Merkmale in verschiedenen Kameraabständen angeordnet sind, wodurch das Verfahren weiter vereinfacht werden kann. Dies ist besonders dann vorteilhaft, wenn beispielsweise die Ermittlung und Veränderung des Kameraabstandes einer zweidimensionalen Kalibrierplatte nur schwer möglich oder ungenau ist.

Vorteilhafterweise werden zumindest zehn, vorzugsweise zumindest zwanzig, besonders bevorzugt zumindest dreißig Merkmale vorgesehen, wobei die Merkmale vorzugsweise auf dem dreidimensionalen Kalibrierobjekt oder auf der zweidimensionalen Kalibrierplatte angeordnet werden. Dadurch sind ausreichend Merkmale vorhanden und es wird eine gute Qualität der Fehlerkorrektur erreicht.

Vorzugsweise wird als mathematisches Verfahren zur Bestimmung des Zusammenhangs zwischen den unterschiedlichen bekannten Merkmalspositionen im Raum und den Bildpositionen in der Bildebene der Kamera ein Lochkameramodell nach Hartley und Zisserman verwendet. Als Korrekturmodell für die geometrische Verzeichnung und/oder die chromatische Aberration wird vorzugsweise ein radial-tangentiales Modell nach Brown-Conrady verwendet und als Korrekturmodell für die Vignettierung vorzugsweise eine radiale Vignettierungsfunktion mit Vignettierungsparametern und einer Pixelintensität. Diese Modelle werden bereits erfolgreich im Stand der Technik angewendet und liefern gute Ergebnisse.

Gemäß einer bevorzugten Verwendung des Verfahrens ist vorgesehen, dass bei einer von den zumindest zwei definierten Einstellungsspezifikationen abweichenden Einstellungsspezifikation einer der ausgewählten, den Abbildungsfehler beeinflussenden Kameraeinstellungen die Korrekturparameter des Korrekturmodells zur Korrektur des zumindest einen Abbildungsfehlers bei dieser abweichende Einstellungsspezifikation aus den ermittelten Korrekturparametern der zumindest zwei definierten Einstellungsspezifikationen berechnet werden, dass die berechneten Korrekturparameter für die abweichende Einstellungsspezifikation im Korrekturmodell der Kamera zur Korrektur des zumindest einen Abbildungsfehlers bei der abweichenden Einstellungsspezifikation hinterlegt werden und dass das Korrekturmodell mit den berechneten hinterlegten Korrekturparametern verwendet wird, um den zumindest einen Abbildungsfehler in der Bildebene der Kamera bei der von den zumindest zwei definierten Einstellungsspezifikationen abweichenden Einstellungsspezifikation zu korrigieren. Dadurch kann eine Kamera im laufenden Betrieb an geforderte Randbedingungen angepasst werden und es können Abbildungsfehler bei Einstellungsspezifikationen korrigiert werden, die nicht im Rahmen der Ermittlung der Korrekturparameter berücksichtigt wurden.

Vorzugsweise werden die Korrekturparameter für die abweichende Einstellungsspezifikation mittels einer Hyperbelfunktion und linearer Interpolation oder linearer Regression aus den Korrekturparametern der zumindest zwei definierten Einstellungsspezifikationen berechnet. Dadurch ist es möglich, mit einfachen mathematischen Methoden ausreichend gute Ergebnisse zu erhalten.

Die gegenständliche Erfindung wird nachfolgend unter Bezugnahme auf die Figuren 1 bis 4 näher erläutert, die beispielhaft, schematisch und nicht einschränkend vorteilhafte Ausgestaltungen der Erfindung zeigen. Dabei zeigt

Fig.1 eine beispielhafte Darstellung eines industriellen Bildverarbeitungssystems,

Fig.2 eine Anordnung zur Kalibrierung einer Kamera eines industriellen Bildverarbeitungssystems mit einer Kamera und einem Kalibrierobjekt,

Fig.3a und 3b jeweils ein Beispiel eines Abbildungsfehlers der geometrischen Verzeichnung,

Fig.4 Verwendung eines Korrekturmodells zur Korrektur von Abbildungsfehlern einer Kamera.

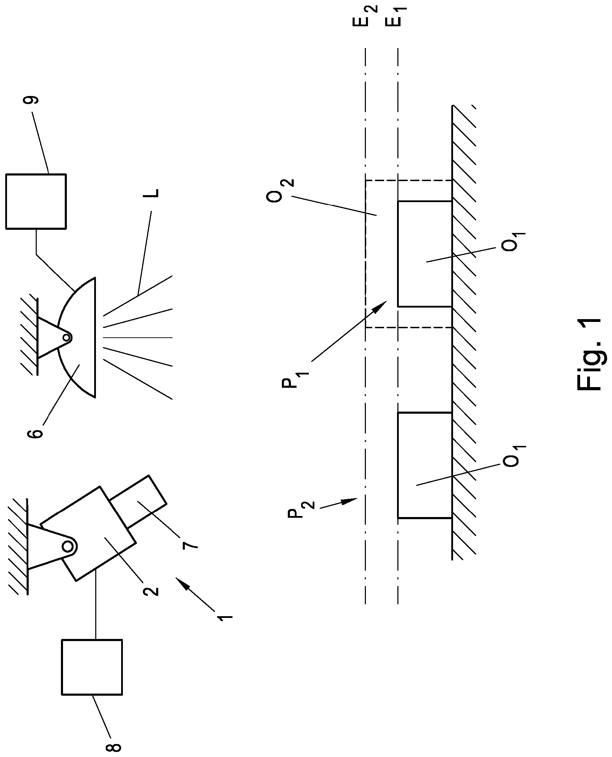

Fig.1 zeigt eine beispielhafte Darstellung eines industriellen Bildverarbeitungssystems 1 in einer Messanwendung eines Objektes $O_1$. Das Bildverarbeitungssystems 1 weist eine Kamera 2 und eine oder mehrere, in die Kamera integrierte oder externe Beleuchtungseinheiten 6 auf, die ortsfest im Raum angeordnet sind, z.B. auf einer geeigneten (nicht dargestellten) Haltevorrichtung. Die Kamera 2 ist so positioniert, dass sich das zu messende Objekt $O_1$ im Aufnahmebereich der Kamera 2 befindet, sodass Bilder des Objektes $O_1$ von der Kamera 2 aufgenommen werden können. Die Bilder werden z.B. in einer geeigneten Auswerteeinheit 8 verarbeitet, vorzugsweise um ein Messergebnis des zu messenden Objekts $O_1$ zu liefern. Eine Messaufgabe könnte z.B. das Erkennen von bestimmten Merkmalen in einer Messebene E1 auf dem Objekt $O_1$ sein oder auch eine tatsächliche Messung von Dimensionen des Objekts $O_1$ oder darauf angeordneten Komponenten oder dergleichen.

Die Beleuchtungseinheit 6 beleuchtet das zu messende Objekt $O_1$ im Aufnahmebereich der Kamera 2. In der industriellen Bildverarbeitung werden dabei vorzugsweise Kameras 2 mit monochromen Bildsensoren verwendet, das erfindungsgemäße Verfahren ist aber auch für Kameras 2 mit Farbsensoren anwendbar. Das Licht L der Beleuchtung weist bestimmte Eigenschaften auf, z.B. eine bestimmte Wellenlänge $\lambda$, bestimmte Lichtstärke, etc. In der Regel, aber nicht zwangsweise, wird monochromatisches Licht L im sichtbaren Bereich oder auch im ultravioletten (UV) oder infrarot (IR) Bereich zur Beleuchtung verwendet. Monochromatisch bedeutet, dass die Wellenlänge $\lambda$ des Lichts L auf ein möglichst enges Wellenlängenband um eine definierte Wellenlange $\lambda$, idealerweise auf eine bestimmte Wellenlänge $\lambda$, beschränkt ist, z.B. UV-Licht oder einfarbiges sichtbares Licht L. Wird weißes Licht L, also Licht L mit vielen verschiedenen Wellenlängen $\lambda_i$, zur Beleuchtung verwendet, so sind monochromatische Fehler mit einem Farb- oder Multi- bzw. Hyperspektralsensor der Kamera 2 nur an den Pixeln mit entsprechenden Filtern korrigierbar.

Die Erfindung wird nachfolgend anhand einer Kamera 2 mit monochromem Bildsensor beschrieben. Je nach Umgebungszustand des gesamten Bildverarbeitungssystems 1, der Beleuchtungseinheit 6 oder eines darin angeordneten Leuchtmittels kann in der Regel nicht immer eine gleichmäßige Beleuchtung gewährleistet werden, was unter Umständen zu einem Abbildungsfehler der Kamera 2 führen kann. Auch das optische System der Kamera 2 selbst kann zu Abbildungsfehlern führen, z.B. einer geometrischen Verzeichnung, einer chromatischen Aberration oder einer Vignettierung. Die Beleuchtungseinheit 6 kann auch mittels einer geeigneten Leuchtensteuereinheit 9 angesteuert werden, z.B. um Schwankungen der Lichtstärke auszugleichen oder zur Realisierung eines Blitzlichtes. Abbildungsfehler können dazu führen, dass die Größenverhältnisse auf einem von der Kamera 2 aufgenommenen Bild des Objekts $O_1$ nicht mit den tatsächlichen Größenverhältnissen des Objekts $O_1$ übereinstimmen oder das Objekt nicht realitätsgenau abgebildet wird. Je nach Größe des Abbildungsfehlers kann es insbesondere bei genauen Messaufgaben zu Messungenauigkeiten kommen, die das Messergebnis so verfälschen, dass es nicht mehr brauchbar ist.

Aber nicht nur die Beleuchtung oder das optische System spielen dabei eine Rolle, sondern z.B. auch der Abstand und Winkel zwischen der Kamera 2 und dem zu messenden Objekt $O_1$ oder Einstellungen der Kamera 2 oder eines Objektivs 7 wie z.B. Blende oder Brennweite. Beispielsweise könnte sich die Position des Objekts $O_1$ von einer ersten Messposition $P_1$ zu einer zweiten Messposition $P_2$ ändern oder es wird ein größeres Objekt $O_2$ verwendet. Im dargestellten Beispiel würden sich dadurch auch der Winkel und der Abstand der Kamera 2 von der Messebene $E_1$ des Objekts $O_1$ oder der Messebene $E_2$ des Objekts $O_2$ verändern, was unter Umständen auch zu einem Abbildungsfehler führen kann, z.B. zu einer geometrischen Verzeichnung.

In der Regel wird also insbesondere bei Messaufgaben versucht, die Randbedingungen des Bildverarbeitungssystems 1 (Winkel, Abstand, Lichtstärke, Wellenlänge des Lichts, Blendeneinstellung, Brennweite, etc.) möglichst konstant zu halten und die Kamera 2 so zu kalibrieren, sodass möglichst keine Abbildungsfehler verursacht werden oder die Abbildungsfehler minimiert werden. Kalibrieren bedeutet dabei, dass bestimmte Randbedingungen vorgegeben werden und dass die Kamera 2 genau auf diese vorgegebenen Randbedingungen abgestimmt wird. Z.B. kann dies mittels bekannter Algorithmen erfolgen, die z.B. in einer Steuerungseinheit in der Kamera 2 oder in der Auswerteeinheit 8 der Kamera 2 ausgeführt werden.

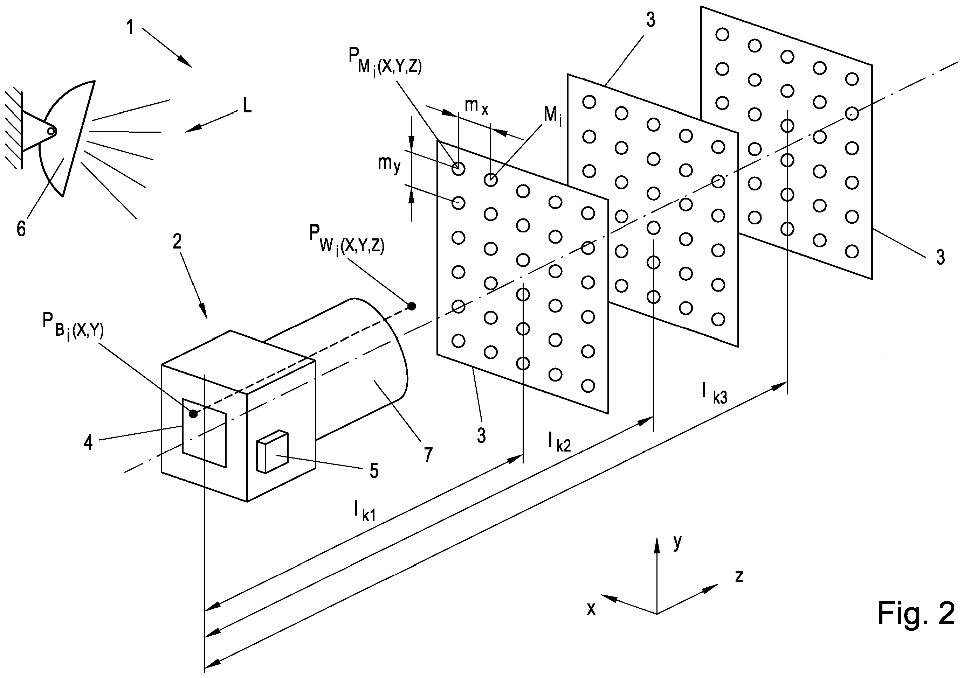

Der Kalibrierung liegen in der Regel Kalibrierdaten für die gegebenen Randbedingungen zugrunde, die verwendet werden, um die Abbildungsfehler auszugleichen. Da so eine Kalibrierung in der Regel sehr aufwändig ist und insbesondere weil sie nur genau für die der Kalibrierung zugrunde gelegten Randbedingungen gültig ist, ist die Flexibilität eines solchen Bildverarbeitungssystems 1, beispielsweise bei Montage auf einem Roboterarm, erheblich eingeschränkt. Bei solchen herkömmlichen Bildverarbeitungssystemen 1 müsste also nach jeder Veränderung der Randbedingungen eine neue Kalibrierung der Kamera 2 durchgeführt werden, um korrekte Messergebnisse gewährleisten zu können. Um diesen Nachteil zu beseitigen ist das erfindungsgemäße Verfahren vorgesehen, wie nachfolgend anhand Fig.2 im Detail beschrieben wird.

Fig.2 zeigt ein industrielles Bildverarbeitungssystem 1 in einem durch eine X-Achse, eine Y-Achse und eine Z-Achse gebildeten Koordinatensystem im Raum mit einer Kamera 2 mit einem Objektiv 7 und einem Kalibrierobjekt 3, auf dem eine bestimmte Anzahl von Merkmalen M, die durch die Kamera 2 erfasst und ausgewertet werden können, angeordnet ist. Um eine benötigte räumliche Tiefe zu erhalten, ist die Kamera 2 im dargestellten Beispiel für die Kalibrierung in Z-Richtung translatorisch senkrecht zum Kalibrierobjekt 3 veränderbar angeordnet und das Kalibrierobjekt 3 ist ortsfest angeordnet.

Es kann damit ein Kameraabstand $I_K$ der Kamera 2 vom Kalibrierobjekt 3 verändert werden. Es könnte aber auch umgekehrt sein, also eine ortsfeste Kamera 2 und ein Kalibrierobjekt 3 mit in Z-Richtung translatorisch veränderlicher Position. Durch den veränderlichen Kameraabstand $I_K$ kann ein zweidimensionales Kalibrierobjekt 3 verwendet werden, eine sogenannte zweidimensionale Kalibrierplatte. Zur Bewegung der Kamera 2 in Z-Richtung kann die Kamera 2 z.B. auf einer (nicht dargestellten) Linearschiene befestigt werden. Die Größe der Kalibrierplatte wird vorzugsweise so festgelegt, dass auch bei minimalem Kameraabstand $I_K$ der Kalibrierplatte von der Kamera 2 noch die ganze Kalibrierplatte mit allen Merkmalen M abgedeckt wird.

Die Ausgangsposition der Kamera 2 kann beliebig gewählt werden, wichtig ist allerdings, dass die Translation der Kamera 2 in Z-Richtung reproduzierbar ist und die Entfernungsunterschiede der einzelnen Kameraabstände $I_K$ möglichst genau bekannt sein, was ohne großem Aufwand realisierbar ist. Wichtig ist zudem, dass die Kalibrierplatte möglichst genau im rechten Winkel zur Kamera ausgerichtet ist, um zu gewährleisten, dass sich die Abstände der Merkmale M in Z-Richtung von der Kamera 2 bei einem bestimmten Kameraabstand $I_K$ nicht unterscheiden. Das kann durch die Konstruktion der Kalibrieranordnung sichergestellt werden. Die Kalibrierplatte wird von einer geeigneten Beleuchtungseinheit 6 möglichst homogen mit, vorzugsweise, monochromatischem Licht L beleuchtet.

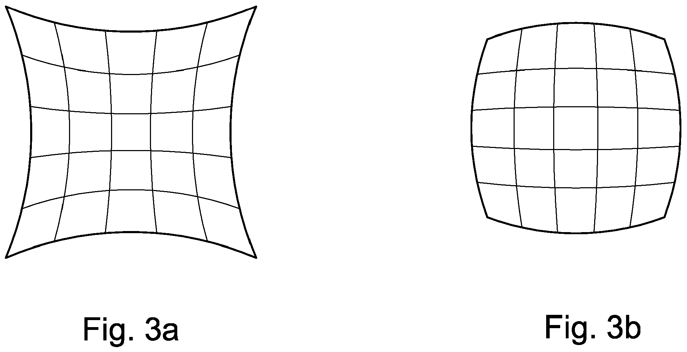

Bei einer Aufnahme eines Bildes von der Kamera 2 wird von einem realen Punkt im Raum, einem sogenannten Weltpunkt $P_{W(X, Y, Z)}$, ein zugehöriger Bildpunkt $P_{B(X, Y)}$ in einer Bildebene 4 der Kamera 2 erzeugt. Die Kamera 2 weist eine bestimmte Zahl von veränderlichen Kameraeinstellungen auf, wie beispielsweise eine Brennweite, einen Fokusabstand F, eine Blende B oder eine bekannte Wellenlänge λ des Lichts L einer Beleuchtung, mit der ein abzubildendes Objekt, im konkreten Fall das Kalibrierobjekt 3, hier die Kalibrierplatte, beleuchtet wird. Bei einer aktiven Kalibrierplatte können aber auch die Merkmale M selber mit Licht L der bekannten Wellenlänge λ leuchten. Diese veränderlichen Kameraeinstellungen führen unter anderem wegen des physikalischen Verhaltens der optischen Komponenten der Kamera 2 in der Regel zu Abbildungsfehlern in der Bildebene 4 der Kamera 2. Solche Abbildungsfehler sind beispielsweise eine geometrische Verzeichnung, eine Vignettierung oder eine chromatische Aberration. Die Eigenschaften, Ursachen und die Auswirkungen dieser Abbildungsfehler sind bekannt, weshalb hier nicht im Detail darauf eingegangen wird. Beispielsweise führt eine geometrische Verzeichnung dazu, dass die Positionen der aufgenommenen Bildpunkte $P_{B(X, Y)}$ in der Bildebene 4 der Kamera 2 im Verhältnis nicht den realen Positionen der Weltpunkte $P_{W(X, Y)}$ entsprechen, wodurch sich ein kissenförmig verzerrtes Bild wie in Fig.3a oder ein tonnenförmig verzerrtes Bild wie in Fig.3b ergibt.

Bei manchen Anwendungen, z.B. in der herkömmlichen Fotografie werden solche Abbildungsfehler bis zu einem gewissen Grad akzeptiert oder sind sogar gewünscht, wie z.B. in der Kunst-Fotografie. Bei industriellen Bildverarbeitungssystemen 1 sind Abbildungsfehler aber in der Regel unerwünscht, da insbesondere bei Mess-Anwendungen, die Messergebnisse verfälscht würden, weil ein in der Bildebene 4 der Kamera 2 dargestelltes Objekt O verfälscht ist. Beispielsweise würde ein gemessener Abstand oder eine gemessene Position nicht dem realen zu messenden Abstand am Objekt O oder der realen Position des Objektes O entsprechen.

Es ist daher erwünscht, diese Abbildungsfehler mit möglichst geringem Aufwand und möglichst einfach zu minimieren, oder sogar zu kompensieren. Mathematische Verfahren zur Korrektur der Abbildungsfehler sind grundsätzlich im Stand der Technik bekannt und können zur Kalibrierung der Kamera 2 für eine bestimmte vorgegebene Kameraeinstellung oder eine vorgegebene Kombination von mehreren Kameraeinstellungen verwendet werden. Problematisch ist allerdings die praktische Anwendung, insbesondere wenn ein oder mehrere Kameraeinstellungen der Kamera 2 verändert werden, z.B. wenn sich die der Fokusabstand F der Kamera 2 ändert oder wenn sich die Wellenlänge λ des Lichts L der Beleuchtung ändert. Mit herkömmlichen Kalibrier-Verfahren müsste die Kamera 2 nach jeder Veränderung einer Kameraeinstellung neu kalibriert werden, um geeignete Messergebnisse liefern zu können, was sehr zeitintensiv und daher unerwünscht ist.

Das Kalibrierobjekt 3 ist im dargestellten Beispiel in Fig.2 als zweidimensionale passive ebene Kalibrierplatte ausgeführt und weist eine Mehrzahl i von Merkmalen $M_i$ auf, die in einem definierten Raster mit bekannten Merkmalspositionen $P_{Mi(X, Y)}$ auf der Kalibrierplatte angeordnet sind. Passiv bedeutet, dass die Kalibrierplatte z.B. von einer geeigneten Beleuchtungseinheit 6 beleuchtet werden muss. Die Beleuchtung sollte möglichst gleichmäßig über die gesamte Fläche der Kalibrierplatte erfolgen. Bei einer aktiven Kalibrierplatte sollen die einzelnen Merkmale M selbst möglichst homogen mit Licht L einer bestimmten Wellenlänge λ strahlen.

Mehrzahl bedeutet in diesem Zusammenhang jedenfalls eine Zahl größer als eins, im dargestellten Beispiel sind z.B. zwanzig Merkmale M auf der Kalibrierplatte vorgesehen. Grundsätzlich wird die Genauigkeit des erfindungsgemäßen Verfahrens erhöht, je größer die Anzahl von Merkmalen M ist, jedoch sollte die Anzahl der Merkmale aber auch nicht zu groß gewählt werden, weil dadurch die Dauer des Verfahrens verlängert wird, was unerwünscht ist. Vorzugsweise sind aber zumindest zwanzig Merkmale M auf der Kalibrierplatte vorgesehen, besonders bevorzugt zumindest dreißig Merkmale, da mit dieser Anzahl im Wesentlichen ein gutes Ergebnis erzielt wird und mit einer weiteren Erhöhung der Anzahl der Merkmale M nur mehr geringe Steigerungen der Genauigkeit erzielt werden.

Vorzugsweise sind die Merkmale M, wie im dargestellten Beispiel, als helle Kreise auf dunklem, möglichst reflexionsarmem Hintergrund ausgeführt, um einen hohen Kontrast zu gewährleisten. Die Kreise sind in konstanten Abständen $m_X$, $m_Y$ voneinander beabstandet auf der Kalibrierplatte angeordnet. Die Merkmale M könnten aber auch eine andere Form wie z.B. in Form eines Schachbrettmusters angeordnet sein und andere Abstände voneinander aufweisen. Wichtig ist, dass die Merkmalspositionen $P_{Mi(X, Y)}$ der einzelnen Merkmale $M_i$ auf in der Ebene auf der Kalibrierplatte möglichst exakt bekannt sind (der Index i bezieht sich auf die Anzahl der Merkmale M).

Zur Definition der Merkmalsposition $P_{Mi(X, Y, Z)}$ im Raum ist eine möglichst exakte Bestimmung der dritten Koordinate, hier des Kameraabstandes $I_K$ in Z-Richtung erforderlich. Helle Kreise auf einem dunklen, reflexionsarmen Hintergrund haben den Vorteil, dass die Positionen der Kreise, also die Merkmalspositionen $P_{Mi(X, Y, Z)}$, auch bei unscharfen Bildern zuverlässig ermittelt werden können. Das ist deshalb wichtig, da zur Ermittlung der Korrekturparameter (wie nachfolgend beschrieben) auch unterschiedliche Einstellungen der Schärfe bei unverändertem Kameraabstand $I_K$ verwendet werden können, sofern die Kamera 2 eine entsprechende veränderliche Kameraeinstellung (veränderlicher Fokusabstand F) aufweist. Die Kreise sollten von der Beleuchtungseinheit 6 möglichst homogen beleuchtet werden.

Bei einer passiven Kalibrierplatte ist es erforderlich, dass die Merkmale M von einer geeigneten Beleuchtungseinheit 6 aktiv beleuchtet werden. Alternativ könnte aber auch eine aktive Kalibrierplatte oder ein aktives dreidimensionales Kalibrierobjekt 3 mit aktiven Merkmalen $M_i$ verwendet werden. Aktive Merkmalen M werden nicht von einer Beleuchtungseinheit 6 beleuchtet, sondern senden aktiv Licht aus, um ihre Position zu signalisieren. Aktive Merkmale $M_i$ können z.B. als punktförmige Leuchtdiode (LED) ausgeführt sein. Wichtig dabei ist, dass für jede LED eine homogen helle, vorzugsweise kreisförmige Abbildung im Bild erreicht wird. Dazu könnten die LEDs z.B. in Bohrungen auf der Kalibrierplatte versenkt sein mit einer darüber angeordneten Mattscheibe. Die Lichtquelle könnte aber auch aus LCD, TFT oder aus anderen passiven oder aktiven Elementen bestehen, wie sie bei der Displayentwicklung eingesetzt werden, z.B. hat eine monochrom leuchtende organische Leuchtdiode (OLED) den Vorteil, eine über die Fläche sehr homogen leuchtende Lichtquelle zu sein.

Die Verwendung der zweidimensionalen Kalibrierplatte als Kalibrierobjekt 3 ist aber nur optional, es könnte auch ein dreidimensionales Kalibrierobjekt 3 verwendet werden, auf dem die Merkmale $M_i$ angeordnet sind, wobei zumindest zwei Merkmale $M_i$ einen verschiedenen Kameraabstand $I_K$ aufweisen. Es könnte aber auch nur ein einziges Merkmal $M_i$ verwendet werden, dessen Position im Raum veränderbar ist. Ein dreidimensionales Kalibrierobjekt 3 hat beispielsweise den Vorteil, dass die Position der Kamera 2 relativ zum dreidimensionalen Kalibrierobjekt 3 (=Kameraabstand $I_K$) nicht verändert werden muss (oder umgekehrt).

Das erfindungsgemäße Verfahren wird nachfolgend anhand der Ermittlung eines Korrekturmodells zur Korrektur dreier Abbildungsfehler für zwei veränderliche Kameraeinstellungen bei drei verschiedenen Kameraabständen $I_K$ beschrieben. Die drei Abbildungsfehler sind die geometrische Verzeichnung, die chromatische Aberration und die Vignettierung und die beiden veränderlichen Kameraeinstellungen sind die Wellenlänge $\lambda$ des Lichts L der Beleuchtung und der Fokusabstand F. Natürlich ist das Verfahren aber nicht auf das dargestellte Ausführungsbeispiel beschränkt, es wäre auch möglich nur einen Abbildungsfehler bei Veränderung nur einer Kameraeinstellung (z.B. nur Blende B oder nur Fokusabstand F) zu korrigieren oder aber auch mehrere Abbildungsfehler bei gleichzeitiger Veränderung mehrerer Kameraeinstellungen. Grundsätzlich gilt, je mehr Kameraeinstellungen verändert werden und je mehr Abbildungsfehler korrigiert werden sollen, desto größer wird auch der Aufwand zur Durchführung des erfindungsgemäßen Verfahrens.

Erfindungsgemäß werden zumindest zwei definierte Einstellungsspezifikationen zur Veränderung der jeweiligen Kameraeinstellung vorgegeben und es wird für jede der vorgegebenen Einstellungsspezifikationen von der Kamera 2 ein Bild der Mehrzahl von Merkmalen $M_i$ mit unterschiedlichen bekannten Merkmalspositionen $P_{Mi(X, Y, Z)}$ im Raum aufgenommen. Im konkreten Beispiel werden die Wellenlänge $\lambda$ des Lichts L dreimal verändert und der Fokusabstand F wird dreimal verändert. Zusätzlich wird im dargestellten Beispiel der Kameraabstand $I_K$ dreimal verändert und es wird für jeden Kameraabstand $I_{K1}$, $I_{K2}$, $I_{K3}$, wie in Fig.1 ersichtlich, jede Wellenlänge $\lambda_1$, $\lambda_2$, $\lambda_3$ und jeden Fokusabstand $F_1$, $F_2$, $F_3$ jeweils ein Bild der, auf der Kalibrierplatte angeordneten Merkmale $M_i$ von der Kamera 2 aufgenommen. Die Einstellungsspezifikationen betreffen hier somit drei verschiedene Werte der Wellenlänge $\lambda$ und drei verschiedene Werte des Fokusabstands F. Beispielsweise wird als Wellenlänge $\lambda_1$ grünes Licht, als Wellenlänge $\lambda_2$ blaues Licht und als Wellenlänge $\lambda_3$ rotes Licht verwendet, das von einer geeigneten monochromatischen Beleuchtung erzeugt wird. Es muss aber nicht zwangsläufig sichtbares Licht L verwendet werden, genauso könnte ultraviolettes (UV) oder infrarotes (IR) Licht L verwendet werden.

In Summe werden in diesem Beispiel also 27 Bilder der jeweils zwanzig Merkmale $M_i$ von der Kamera 2 aufgenommen. Beispielsweise kann der erste Kameraabstand $I_{K1}$ bei zwei Drittel eines Fokusabstands F gewählt werden (1/3 vor Fokus), der dritte Kameraabstand $I_{K3}$ bei fünf Drittel eines Fokusabstands F (2/3 nach Fokus) und der zweite Kameraabstand $I_{K2}$ in der Mitte zwischen diesen beiden Kameraabständen $I_{K1}$, $I_{K3}$. Diese Anordnung hat den Vorteil, dass keine stark defokussierten Aufnahmen resultieren, was zu einfacheren Beleuchtungsbedingungen und zu schärferen Bildern führt, was wiederum eine genaue Bestimmung der Merkmalspositionen $P_{Mi(X, Y, Z)}$ in der Bildebene 4 erleichtert.

Vorteilhafterweise werden für jede Kameraeinstellung jeweils zumindest zwei Einstellungsspezifikationen gewählt, besonders bevorzugt aber jeweils drei Einstellungsspezifikationen, so wie im dargestellten Ausführungsbeispiel. Das Ergebnis wird beispielsweise nur mehr geringfügig verbessert, wenn mehr als drei Fokusabstände F verwendet werden. Grundsätzlich gilt, analog der Anzahl der Merkmale $M_i$, je größer die Anzahl der Einstellungsspezifikationen einer Kameraeinstellung gewählt wird, desto genauer wird das Ergebnis der Korrektur (jedoch mit nur geringfügiger Verbesserung), desto größer wird allerdings auch der zeitliche Aufwand. Die Wahl der Anzahl der Merkmale $M_i$ und der Anzahl der Einstellungsspezifikationen wird in der praktischen Anwendung vorteilhafterweise so gewählt, dass sowohl Genauigkeitsanforderungen erfüllt werden, als auch zeitliche Grenzen eingehalten werden. Bevorzugt werden jeweils genau drei Einstellungsspezifikationen pro veränderliche Kameraeinstellung und zwischen zwanzig und vierzig Merkmalen $M_i$ verwendet.

Aus den aufgenommenen Bildern ermittelt die Kamera 2, beispielsweise mittels einer geeigneten, in der Kamera 2 integrierten oder extern angeordneten, Recheneinheit 5 die Merkmalspositionen $P_{Mi(X, Y)}$ in der Bildebene 4, also die Bildpunkte $P_{Bi}$. Im dargestellten Beispiel werden dazu die Mittelpunkte der kreisförmigen Merkmale $M_i$ ermittelt. Mittels zumindest eines bekannten mathematischen Verfahrens wird ein Zusammenhang zwischen den unterschiedlichen bekannten Merkmalspositionen $P_{Mi(X, Y, Z)}$ im Raum, also den Weltpunkten $P_{Wi}$, und den korrespondierenden Bildpunkten $P_{Bi(X,Y)}$, also den vermessenen Merkmalspositionen $P_{Mi(X,Y)}$ in der Bildebene 4 der Kamera 2 ermittelt, sogenannte Punktkorrespondenzen (der Index i bezieht sich auf die Anzahl der Merkmale $M_i$). Die Merkmalspositionen $P_{Mi(X, Y, Z)}$ im Raum sind, wie beschrieben, durch die bekannte Anordnung der Merkmale $M_i$ auf der Kalibrierplatte und durch den Kameraabstand $I_{Kj}$ in Z-Richtung definiert (der Index j steht für die Anzahl der veränderlichen Kameraabstände $I_K$). Vorzugsweise wird für die Ermittlung des Zusammenhangs das nachfolgend angeführte bekannte Lochkameramodell nach Hartley & Zisserman verwendet oder andere geeignete mathematische Modelle. $P_{Bi(X,Y)} = P * P_{Wi(X,Y,Z)}$ mit der

$$K = \begin{bmatrix} f_X & s & c_X \\ 0 & f_Y & c_Y \\ 0 & 0 & 1 \end{bmatrix},$$

Projektionsmatrix $P = K*[R|\text{-}\tilde{C}]$, die wiederum in eine 3 x 3 Kalibrationsmatrix K mit                    eine 3 x 3 Rotationsmatrix R und einen Translationsvektor C zerlegt werden kann. Die Parameter der Kalibrationsmatrix K sind eine horizontale und eine vertikale Brennweite $f_X$, $f_Y$, ein Skew s (der eine etwaige Abweichung der Bildebene 4 vom rechten Winkel berücksichtigt) und die Koordinaten eines Hauptpunkts $C_X$ und $C_Y$. Beim Lochkameramodell zeichnet man eine optische Achse durch das Loch (Projektionszentrum) senkrecht auf die Bildebene 4. Dort wo die optische Achse die Bildebene 4 durchstößt liegt der Hauptpunkt C. Dieser einfache Zusammenhang wird auch bei einer realen Kamera 2 mit Objektiv 7 verwendet, obwohl die optische Achse durch das Objektiv 7 bestimmt ist. Bei nicht perfekter Fertigung des Objektivs 7 kann es möglich sein, dass diese optische Achse nicht genau senkrecht auf die Bildebene 4 steht. Dies bewirkt eine affine Scherung des Bildkoordinatensystems (Abweichung von 90°) und wird in der Kalibrationsmatrix K durch den Parameter Skew s modelliert, welcher im Idealfall Null sein sollte. Die Kalibrationsmatrix K beschreibt alle linearen, intrinsischen Parameter der Kamera 2, auch innere Orientierung einer Kamera 2 genannt. Die Rotationsmatrix R und der Translationsvektor C beschreiben die extrinsischen Parameter, die "äußere Orientierung", also die Translation und Rotation zwischen Kamerakoordinaten in der Bildebene 4 der Kamera 2 und Weltkoordinaten der Merkmale $M_i$ in der Ebene auf der Kalibrierplatte (X, Y-Achse) bzw. im Raum (Z-Achse). Die Projektionsmatrix P ordnet also einem Weltpunkt $P_{Wi(X, Y, Z)}$ einen eindeutigen Bildpunkt $P_{Bi(X, Y)}$ zu. Es ist aber zu beachten, dass dies umgekehrt nicht der Fall ist. Ein Bildpunkt $P_{Bi(X, Y)}$ repräsentiert immer einen Sehstrahl. Im Falle einer kalibrierten Kamera 2 kann man zwar die Richtungen von Sehstrahlen messen, also auch Winkel zwischen Sehstrahlen bestimmen, jedoch keine Aussage über die tatsächliche Entfernung des jeweiligen Weltpunktes $P_{Wi(X, Y, Z)}$ von der Kamera 2 treffen. Da das Lochkameramodell im Stand der Technik bekannt ist, wird an dieser Stelle nicht näher darauf eingegangen und z.B. auf die Publikation [R. Hartley and A. Zisserman. Multiple View Geometry in Computer Vision. Cambridge University Press, 2nd edition, 2003.] verwiesen.

Für die Korrektur der Verzeichnung wird im dargestellten Beispiel das nachstehende radial-tangentiale Korrekturmodell nach Brown-Conrady verwendet, es könnte aber auch ein anders geeignetes Modell verwendet werden. $X_d = (X_d; Y_d)^T$ bezeichnet die Koordinaten des verzeichneten Bildpunktes $P_{Bi}$, $X_u = (X_u; Y_u)^T$ die Koordinaten des unverzeichneten Bildpunktes $P_{Bi}$ und $X_c = (C_X; C_Y)^T$ die Koordinaten des Hauptpunktes C in der Bildebene 4. Die Berechnung findet über einen Radius r, radiale Parameter $r_1$, $r_2$, $r_3$ und tangentiale Parameter $t_1$ und $t_2$ statt. Zunächst wird der Ursprung des Bildkoordinatensystems in den Hauptpunkt C verschoben. Im Hauptpunkt C gibt es keine Verzeichnung (und auch keine chromatische Aberration). Die Verzeichnung wird nun über den Abstand zum Hauptpunkt C (Radius r) modelliert. Die radialen Parameter $r_i$ modellieren eine radiale Verschiebung eines Bildpunktes $P_{Bi}$. Der Bildpunkt $P_{Bi}$ wird entweder zu nahe oder zu weit weg vom Hauptpunkt C abgebildet. Der korrigierte unverzeichnete Bildpunkt $P_{Bi}$ liegt dann genau richtig. Analog dazu modellieren die tangentialen Parameter $t_i$ eine tangentiale Verschiebung eines Bildpunktes $P_{Bi}$. Es wäre auch möglich sowohl für die radialen Parameter $r_i$, als auch für die tangentialen Parameter $t_i$ höhere Ordnungen hinzuzufügen, allerdings wird wegen des geringen Einflusses hier darauf verzichtet.

$$r = \sqrt{(X_u - C_X)^2 + (X_u - C_Y)^2)}$$

$$X_d = X_u(1 + r_1 r^2 + r_2 r^4 + r_3 r^6) + 2t_1 X_u Y_u + t_2(r^2 + 2X_u)^2$$

$$Y_d = Y_u(1 + r_1 r^2 + r_2 r^4 + r_3 r^6) + t_1(r^2 + 2Y_u)^2 + 2t_2 X_u Y_u$$

Eine vollständige, geometrisch korrekte Ermittlung aller Kameraparameter (Kalibrationsmatrix K, radiale Parameter $r_i$, tangentiale Parameter $t_i$) benötigt eine initiale Schätzung gefolgt von einer iterativen Minimierung eines Fehlermaßes, hier des Rückprojektionsfehlers. Wenn die Kamera 2 kalibriert ist und die Lage der Merkmale $M_i$ am Kalibrierobjekt 3 bekannt ist (Weltpunkt $P_{Wi(X, Y, Z)}$), können diese Weltpunkte $P_{Wi(X, Y, Z)}$ rechnerisch in die Bildebene 4 projiziert werden. Allerdings wird auch bei noch so guter Kalibrierung eine Abweichung zwischen einem in die Bildebene 4 projizierten Weltpunkt $P_{Wi(X, Y, Z)}$ (Bildpunkt $P_{Bi}$) und dem tatsächlichen Abbild des Weltpunkts $P_{Wi(X, Y, Z)}$ im realen Kamerabild. Der Abstand zwischen dem realen Punkt und projiziertem Weltpunkt $P_{Wi(X, Y, Z)}$ (Bildpunkt $P_{Bi}$) ist der Rückprojektionsfehler.

In der iterativen Minimierung wird der Fehler für viele Punkte insgesamt minimiert, wodurch iterativ die Kalibrierung der Kamera 2 verbessert wird. Um eine wechselweise Beeinflussung zwischen den Koordinaten des Hauptpunktes C ($C_x$, $C_y$) und den tangentialen Parametern $t_i$ der Linsenverzeichnung zu vermeiden, ist es vorteilhaft, auf die tangentialen Parameter $t_i$ zu verzichten. Einerseits ist der Einfluss der tangentialen Parameter $t_i$ auf die geometrische Verzeichnung deutlich geringer als jener der radialen Parameter $r_i$ und andererseits wird eine robuste Schätzung des Hauptpunktes C auch für eine Korrektur der chromatischen Aberration, der Vignettierung, sowie für eine Interpolation der Parameter in Bezug auf eine, von den definierten Einstellungsspezifikation einer Kameraeinstellung abweichende Einstellungsspezifikation benötigt (im konkreten Beispiel sind das die Wellenlänge $\lambda$ des Lichts L der Beleuchtung und der Fokusabstand F). Der Einfluss des Skew Parameters s ist in der Regel gering, eine Berücksichtigung wäre aber denkbar und würde nur eine zusätzliche Multiplikation erfordern.

Zur Korrektur der chromatischen Aberration wird im dargestellten Beispiel jeweils eine Beleuchtung der Kalibrierplatte mit monochromatischem roten, grünen und blauen Licht durchgeführt (Wellenlänge $\lambda_1$, $\lambda_2$, $\lambda_3$). Das Wissen über die monochromatische Beleuchtung kann gezielt für die Korrektur der chromatischen Aberration verwendet werden. Dies kann beispielsweise über die gewonnenen Punktkorrespondenzen aus dem Modell nach Hartley & Zisserman erfolgen oder über das Korrekturmodell der geometrischen Verzeichnung (hier das radial-tangentiale Modell nach Brown-Conrady), also durch die Berechnung von drei unabhängigen Sätzen der inneren Kameraparameter ($K_i$, $r_i$ und optional $t_i$) jeweils für rote, grüne und blaue Beleuchtung (Wellenlänge $\lambda_1$, $\lambda_2$, $\lambda_3$). Da das Verfahren grundsätzlich bekannt ist, wird an dieser Stelle auf die Publikation [Ryuji Matsuoka, Kazuyoshi Asonuma, Genki Takahashi, Takuya Danjo, and Kayoko Hirana. Evaluation of correction methods of chromatic aberration in digital camera images. ISPRS Photogrammetric image analysis, 3:25, 2012.] verwiesen.

Der Effekt der Vignettierung entsteht zufolge verschiedener Einflüsse. Eine Einteilung erfolgt in der Regel in natürliche Vignettierung (durch den Einfallswinkel), Pixel-Vignettierung (durch den Kamerasensor), optische Vignettierung (durch geblockte Lichtwege innerhalb der Optik) und mechanische Vignettierung (geblockte Lichtwege durch andere Kameraelemente, z.B. durch Filter). Die Vignettierung weist eine radiale Charakteristik auf und kann durch ein vom Hauptpunkt C ausgehendes, radiales Korrekturmodell behandelt werden. Dies erlaubt das Erstellen einer Vignettierungsfunktion V(r), die vom Radius r abhängig ist. Die Bestimmung des Radius r erfolgt analog wie bei der Verzeichnung. Die neue korrigierte Pixelintensität $I_{korr}$ zur Korrektur der Vignettierung ergibt sich durch eine Multiplikation der Intensität I eines Pixels mit dem Ergebnis der Vignettierungsfunktion V(r).

$$V(r) = 1 + \alpha_1 r^2 + \alpha_2 r^4 + \alpha_3 r^6 \ldots$$

$$I_{korr} = V(r) * I$$

Aus den ermittelten Punktkorrespondenzen kann für jedes Merkmal $M_i$ bei jeder Einstellungsspezifikation jeder Kameraeinstellung und bei jedem Kameraabstand $I_K$ eine Kalibrationsmatrix K ermittelt werden, im dargestellten Beispiel also eine Kalibrationsmatrix K für jedes der zwanzig Merkmale $M_i$ bei jedem der drei Kameraabstände $I_{K1}, I_{K2}, I_{K3}$, jedem der drei Wellenlängen $\lambda_1, \lambda_2, \lambda_3$ der monochromatischen Beleuchtung und jedem der drei Fokusabstände $F_1, F_2, F_3$. Die Ermittlung der Kalibrationsmatrix K kann z.B. mittels des bekannten Direct Linear Transform (DLT) Algorithmus erfolgen, wobei vorzugsweise zur Verbesserung des Ergebnisses eine iterative Optimierung der Kalibrationsmatrix K z.B. mittels des bekannten Levenberg-Marquardt Algorithmus durchgeführt wird. Zu den Parametern der Kalibrationsmatrix K muss hier außerdem die Bestimmung der nichtlinearen Parameter $r_1$ und $r_2$ der Verzeichnung hinzugenommen werden.

Die Verwendung monochromatischer Beleuchtung hat zur Folge, dass die ermittelten Parameter eindeutig einer Wellenlänge $\lambda_1, \lambda_2, \lambda_3$ zuordenbar ist. Durch die Korrektur der geometrischen Verzeichnung je Wellenlänge $\lambda_1, \lambda_2, \lambda_3$ ergibt sich implizit eine Korrektur der chromatischen Aberration. In der Regel ist der messbare Fehler aufgrund der chromatischen Aberration deutlich kleiner als jener der geometrischen Verzeichnung, weshalb auf den dritten Term $(r_3 * r^6)$ verzichtet werden könnte. Allerdings sind Fehler der chromatischen Aberration generell meist deutlicher sichtbar und das Verzichten auf den dritten Term $(r_3 * r^6)$ könnte hier deutlicher ins Gewicht fallen. Vorzugsweise findet die Korrektur in einem ersten Schritt ohne den dritten Term statt, ist eine höhere Korrekturgenauigkeit erwünscht, kann eine Anpassung um den dritten Term oder ein geeignetes Optimierungsverfahren verwendet werden, welches die verschiedenen Punktdistanzen zwischen den gewählten Wellenlängen $\lambda_i$ minimiert.

Für die Korrektur der Vignettierung werden die Parameter $\alpha_i$ aus obiger Formel bestimmt. Diese Parameter ändern sich mit Änderung der Kameraeinstellungen, wie z.B. der Blende B. Im dargestellten Beispiel ist die Blende B konstant, deshalb sind Aufnahmen bei verschiedenen Kameraabständen $I_{K1}$-$I_{K3}$ notwendig. Für die Bildaufnahme ist vorzugsweise ein Merkmal $M_i$ mit hellem, homogenem monochromatischem Licht gleichmäßig auszuleuchten. Sollte die Beleuchtung nicht gleichmäßig sein, so kann eine Aufnahme von mehreren Bildern mit anschließender Mittelwertbildung erfolgen. Theoretisch wäre es auch möglich, die Parameter $\alpha_i$ aus drei Pixelintensitäten $I_1$-$I_3$ mit bekannten Radien $r_1$-$r_3$ vom Hauptpunkt C und der Pixelintensität $I_C$ am Hauptpunkt C zu berechnen. Da dadurch kleine Fehler einen großen Einfluss auf das Ergebnis haben, erfolgt die Korrektur, wie im vorliegenden Fall, vorzugsweise mittels eines stark überbestimmten Gleichungssystems.

Die beschriebenen einzelnen Korrekturmodelle der verschiedenen Abbildungsfehler können separat z.B. in der Recheneinheit 5 der Kamera 2 hinterlegt werden oder zusammengefügt und als ein gesamtes Korrekturmodell in der Recheneinheit 5 hinterlegt werden, das hängt im Wesentlichen von der konkreten Ausgestaltung der Recheneinheit 5 ab und von der Implementierung, die vorzugsweise in Form einer geeigneten Software erfolgt.

Jede Korrektur eines Abbildungsfehlers ist von den veränderlichen Kameraeinstellungen abhängig. Bei einer bestimmten Kameraeinstellung mit definierten Einstellungsspezifikationen ermittelte Korrekturparameter $K_i, r_i, t_i, \alpha_i$ sind damit nur für genau diese Kombination von Kameraeinstellung und Einstellungsspezifikation gültig. Würde ein einziger Satz von Korrekturparametern $K_i, r_i, t_i, \alpha_i$ für alle anderen Einstellungsspezifikationen einer oder mehrerer Kameraeinstellungen verwenden werden, würde diese zu sehr großen Abbildungsfehlern führen. Der Kameraabstand $I_K$ ist im Kontext der Erfindung wie bereits erwähnt keine veränderliche Kameraeinstellung, da er keinen Einfluss auf den Abbildungsfehler hat. Die Veränderung des Kameraabstands $I_K$ bei der Ermittlung des Korrekturmodells ist aber trotzdem vorteilhaft, um ein Korrekturmodell zu erhalten, das neben der Korrektur des Abbildungsfehlers auch ermöglicht, scharfe Bilder mit der Kamera 2 aufzunehmen.

Da es aber unmöglich ist, für jede Einstellungsspezifikation jeder Kameraeinstellung und optional für jeden möglichen Kameraabstand $I_K$ eine Ermittlung der Korrekturparameter $K_i, r_i, t_i, \alpha_i$ durchzuführen, bzw. dies mit einem unzumutbar hohen zeitlichen Aufwand verbunden wäre, werden die Korrekturparameter $K_i, r_i, t_i, \alpha_i$ für eine abweichende Einstellungsspezifikation einer Kameraeinstellung und optional für einen von den gewählten Kameraabständen $I_K$ abweichenden Kameraabstand $I_K$ aus den zuvor ermittelten Korrekturparametern $K_i, r_i, t_i, \alpha_i$ berechnet. Vorzugsweise werden die ermittelten Korrekturparameter $K_i, r_i, t_i, \alpha_i$ für die gewählten Einstellungsspezifikationen und optional für die gewählten Kameraabstände $I_K$ in der Recheneinheit 5 der Kamera 2 hinterlegt, beispielsweise bei der Herstellung der Kamera 2 im Rahmen des Produktionsprozesses bzw. bei einer auf den Produktionsprozess nachfolgenden Kalibrierung. Bei Verwendung der Kamera 2, beispielsweise bei einem Anwender, werden die zur Korrektur eines Abbildungsfehlers bei einer bestimmten Einstellungsspezifikation einer Kameraeinstellung erforderlichen Korrekturparameter von der Recheneinheit 5 aus den hinterlegten Korrekturparametern $K_i, r_i, t_i, \alpha_i$ berechnet.

Für die Berechnung der Korrekturparameter wird vorzugweise eine Interpolation verwendet, wobei die Korrekturparameter vorzugsweise mittels einer Hyperbelfunktion $y = \dfrac{a}{x} + b$ und linearer Interpolation $y = b_1 * x + b_0$ aus den

hinterlegten Korrekturparametern $K_i$, $r_i$, $t_i$, $\alpha_i$ ermittelt werden. Stehen in einem linear zu interpolierenden Bereich mehr als zwei Punkte zur Verfügung, ist es vorteilhaft, eine Gerade mittels linearer Regression zu ermitteln. Die lineare Regression unterscheidet sich von der linearen Interpolation dadurch, dass die Gerade so angeordnet wird, dass ein Fehler (im Allgemeinen die Methode der Summe der kleinsten Quadrate der Normalabstände) minimiert wird. Vorzugsweise wird für die Brennweite f die Hyperbelfunktion verwendet, für alle anderen Parameter wird linear interpoliert.

Es ist aber zu beachten, dass sich nicht alle Kameras 2 bzw. insbesondere Kameraobjektive 7 gleich verhalten. Manche Objektive 7 können z.B. im näheren Fokusbereich ein deutlich anderes Verhalten als im Fernbereich aufweisen. Jedes Modell eines Objektivs 7 sollte deshalb auf dieses Verhalten im angestrebten Arbeitsbereich untersucht werden, um die verwendeten Interpolationsbereiche sinnvoll zu gestalten.

Das erfindungsgemäße Verfahren zur Erzeugung des Korrekturmodells wurde im dargestellten Beispiel anhand zweier veränderlicher Kameraeinstellungen (Wellenlänge $\lambda$, Fokusabstand F) und dreier Kameraabstände $I_K$ erläutert, natürlich könnten aber auch mehr oder weniger veränderliche Kameraeinstellungen und Kameraabstände $I_K$ verwendet werden. Würde beispielsweise die Blende B als zusätzliche veränderliche Kameraeinstellung verwendet werden, wären zumindest zwei unterschiedliche Einstellungsspezifikationen für die Blende B zu verwenden und bei jeder Einstellungsspezifikation der Blende B (verschiedene Blendenöffnungen) und bei jeder Einstellungsspezifikation der beiden anderen veränderlichen Kameraeinstellungen (hier Wellenlänge $\lambda_i$, Fokusabstand $F_i$) und der gewählten Kameraabstände $I_K$ ein Bild der, auf der Kalibrierplatte angeordneten, Merkmale $M_i$ aufzunehmen. Bei zwei veränderlichen Kameraeinstellungen mit jeweils drei Einstellungsspezifikationen und drei Kameraabständen $I_K$ ergeben sich damit, wie beschrieben 27 Bilder der Kalibrierplatte mit den darauf angeordneten Merkmalen M, bei drei veränderlichen Kameraeinstellungen und drei Kameraabständen $I_K$ 81 Bilder usw. Allgemein ergibt sich die Anzahl b der Bilder zu $b = s^{K*L}$, $s \in \mathbb{Z} > 1$, $K \in \mathbb{Z}$, $L \in \mathbb{Z}$ wobei K die Anzahl an veränderlichen Kameraeinstellungen (z.B. Fokusabstand F, Blende B, etc.) ist, s die Anzahl der Einstellungsspezifikationen und L die Anzahl von Kameraabständen $I_K$. Wie bereits beschrieben werden zumindest zwei Einstellungsspezifikationen verwendet, wobei sich drei Einstellungsspezifikationen (s = 3) als vorteilhaft erwiesen haben. Die Mindestanzahl $b_{min}$ an Bildern beträgt damit zwei, nämlich bei nur einer veränderlichen Kameraeinstellung (K=1), zwei Einstellungsspezifikationen (s=2) und einem Kameraabstand (L=1).

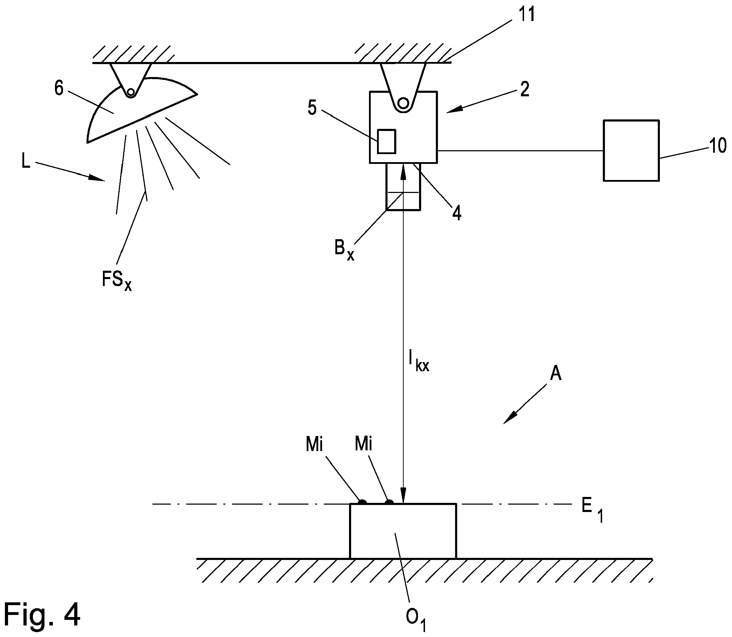

Anhand Fig.4 wird beispielhaft die Verwendung eines, in einer zuvor erfolgten Kalibrierung erzeugten Korrekturmodells zur Korrektur von Abbildungsfehlern bei einer Anwendung einer Kamera 2 beschrieben.

Fig.4 zeigt ein industrielles Bildverarbeitungssystem 1 zum Vermessen von Merkmalen Mi in einer Messebene $E_1$ eines Objekts $O_1$. Eine Kamera 2 mit verstellbarer Blende B ist ortsfest im Raum angeordnet, z.B. an einer Raumdecke 11 oder an einer anderen geeigneten Haltevorrichtung. Die Kamera 2 ist so oberhalb des Objekts $O_1$ angeordnet, dass die Messebene $E_1$ mit den darin liegenden zu vermessenden Merkmalen $M_i$ im Aufnahmebereich A der Kamera 2 liegt. Die Bildebene 4 der Kamera 2 ist in einem bestimmten bekannten Kameraabstand $I_{Kx}$ von der Messebene $E_1$ des Objekts $O_1$ beanstandet und vorzugsweise parallel zur Messebene $E_1$ ausgerichtet. Eine Beleuchtungseinheit 6 beleuchtet den Aufnahmebereich A mit einem Licht L, das eine bekannte Wellenlänge $\lambda_x$ aufweist. Als Blendeeinstellung wird eine bestimmte Blende $B_x$ gewählt. In einer Speichereinheit 5 der Kamera 2 ist ein Korrekturmodell zur Korrektur von Abbildungsfehlern hinterlegt, das mittels des erfindungsgemäßen Verfahrens zuvor erzeugt wurde, beispielsweise im Rahmen einer Kalibrierung bei der Herstellung der Kamera 2.

Im konkreten Beispiel wird davon ausgegangen, dass das Korrekturmodell wie beschrieben für einen veränderlichen Kameraabstand $I_K$, eine veränderliche Blende B und Licht L einer veränderlichen Wellenlänge $\lambda$ erzeugt wurde, z.B. mit einer Kalibrierplatte mit fünfzig Merkmalen $M_i$ und jeweils drei Einstellungsspezifikationen der Blende $B_1$-$B_3$ und der Wellenlänge $\lambda_1$- $\lambda_3$ sowie drei Kameraabständen $I_{K1}$-$I_{K3}$. Die Einstellungsspezifikationen (Werte der Blende $B_x$, des Fokusabstandes $F_x$, des Kameraabstandes $I_{Kx}$) der dargestellten Anwendung in Fig.4 unterscheiden sich nun von den Einstellungsspezifikationen ($B_1$-$B_3$, $\lambda_1$- $\lambda_3$, $I_{K1}$-$I_{K3}$) der Kalibrierung, weisen also im Wesentlichen jeweils einen Wert auf, der zwischen den Einstellungsspezifikationen der Kalibrierung liegt (z.B. $B_1 < B_x < B_3$; $B_2 \neq B_x$).

Um Abbildungsfehler zu korrigieren, die sich aufgrund der von den Einstellungsspezifikationen der Kalibrierung abweichenden Einstellungsspezifikationen der Anwendung in Fig.4 ergeben, werden die Korrekturparameter des in der Kamera 2 hinterlegten Korrekturmodells schnell und einfach adaptiert. Dies geschieht z.B. in der Recheneinheit 5 der Kamera 2, könnte aber auch in einer externen Recheneinheit erfolgen. Dazu werden die bekannten Einstellungsspezifikationen (im konkreten Fall die Wellenlänge $\lambda_x$ und die Blende $B_x$) sowie der Kameraabstand $I_{Kx}$, an die Recheneinheit 5 übermittelt, beispielsweise mittels einer geeigneten Schnittstelle 10. Die Recheneinheit 5 berechnet dann die Korrekturparameter des Korrekturmodells für die neuen Einstellungsspezifikationen (Wellenlänge $\lambda_x$ und Blende $B_x$) sowie Kameraabstand $I_{Kx}$ basierend auf den Korrekturparametern, die im Rahmen der Kalibrierung ermittelt wurden. Wie beschrieben erfolgt diese Berechnung vorzugsweise mittels einer Hyperbelfunktion, linearer Interpolation oder linearer Regression aus den bekannten Korrekturparametern.

Damit kann das industrielle Bildverarbeitungssystem 1 schnell und einfach an sich ändernde Randbedingungen angepasst werden. Wenn sich beispielsweise die Einstellung der Blende B in der Anwendung in Fig.4 ändert, ist es nicht notwendig die Kamera 2 neu zu kalibrieren, wie dies bei Systemen im Stand der Technik erforderlich wäre, sondern die neue Einstellung der Blende B wird über die Schnittstelle 11 an die Recheneinheit 5 der Kamera 2 übermittelt und die Recheneinheit 5 berechnet die dazugehörigen Korrekturparameter des Korrekturmodells.

**Patentansprüche**

1. Verfahren zur Erzeugung eines Korrekturmodells einer Kamera (2) zur Korrektur zumindest eines, durch eine Anzahl ausgewählter veränderlicher Kameraeinstellungen beeinflussten Abbildungsfehlers in einer Bildebene (4) der Kamera (2), wobei eine Mehrzahl (i) von Merkmalen ($M_i$) vorgesehen wird, wobei für jede der ausgewählten, den Abbildungsfehler beeinflussenden veränderlichen Kameraeinstellungen zumindest zwei definierte Einstellungsspezifikationen zur Veränderung der jeweiligen Kameraeinstellung vorgegeben werden, wobei für jede der zumindest zwei vorgegebenen Einstellungsspezifikationen von der Kamera (2) die Mehrzahl (i) von Merkmalen ($M_i$) aufgenommen wird, **dadurch gekennzeichnet, dass** die Mehrzahl (i) von Merkmalen ($M_i$) mit unterschiedlichen bekannten Merkmalspositionen ($P_{Mi(X, Y, Z)}$) im Raum vorgesehen wird, dass von der Kamera (2) aus den aufgenommenen Merkmalen (Mi) in der Bildebene (4) Bildpositionen $P_{Bi(X,Y)}$ der Merkmale (Mi) ermittelt werden, dass mittels zumindest eines bekannten mathematischen Verfahrens ein Zusammenhang zwischen den unterschiedlichen bekannten Merkmalspositionen ($P_{Mi(X, Y, Z)}$) im Raum und den korrespondierenden Bildpositionen $P_{Bi(X,Y)}$ in der Bildebene (4) der Kamera (2) ermittelt wird, dass daraus für jede der zumindest zwei vorgegebenen Einstellungsspezifikationen der ausgewählten veränderlichen Kameraeinstellungen Korrekturparameter zumindest eines vorgegebenen mathematischen Korrekturmodells zur Korrektur des zumindest einen Abbildungsfehlers ermittelt werden **und dass** das zumindest eine Korrekturmodell mit den ermittelten Korrekturparametern in der Kamera (2) hinterlegt wird.

2. Verfahren nach Anspruch 1, **dadurch gekennzeichnet, dass** als Abbildungsfehler eine geometrische Verzeichnung und/oder eine chromatische Aberration und/oder eine Vignettierung vorgesehen werden.

3. Verfahren nach Anspruch 1 oder 2, **dadurch gekennzeichnet, dass** als den Abbildungsfehler beeinflussende veränderliche Kameraeinstellungen eine Brennweite und/oder ein Fokusabstand (F) und/oder eine Blende (B) und oder eine Wellenlänge ($\lambda$) eines Lichts (L) einer Beleuchtung der Merkmale ($M_i$) vorgesehen werden.

4. Verfahren nach einem der Ansprüche 1 bis 3, **dadurch gekennzeichnet, dass** für alle Merkmale (Mi) ein gleicher Kameraabstand (IK) von der Bildebene (4) vorgesehen wird.

5. Verfahren nach Anspruch 4, **dadurch gekennzeichnet, dass** die Merkmale (Mi) auf einer zweidimensionalen Kalibrierplatte angeordnet werden, wobei als Merkmale (Mi) aktive oder passive, vorzugsweise kreisförmige Merkmale ($M_i$) vorgesehen werden.

6. Verfahren nach Anspruch 5, **dadurch gekennzeichnet, dass** der Kameraabstand (IK) zumindest zweimal verändert wird, wobei bei jedem Kameraabstand (IK) die Merkmale (Mi) für jede der zumindest zwei vorgegebenen Einstellungsspezifikationen von der Kamera (2) aufgenommen werden.

7. Verfahren nach einem der Ansprüche 1 bis 3, **dadurch gekennzeichnet, dass** zumindest zwei Merkmale (Mi) mit verschiedenem Kameraabstand (IK) vorgesehen werden.

8. Verfahren nach Anspruch 7, **dadurch gekennzeichnet, dass** die Merkmale (Mi) auf einem dreidimensionalen Kalibrierobjekt (3) angeordnet werden, wobei als Merkmale (Mi) aktive oder passive, vorzugsweise kreisförmige Merkmale ($M_i$) vorgesehen werden.

9. Verfahren nach einem der Ansprüche 1 bis 8, **dadurch gekennzeichnet, dass** zumindest zehn, vorzugsweise zumindest zwanzig, besonders bevorzugt zumindest dreißig Merkmale ($M_i$) vorgesehen werden.

10. Verfahren nach einem der Ansprüche 1 bis 9, **dadurch gekennzeichnet, dass** als mathematisches Verfahren zur Bestimmung des Zusammenhangs zwischen den unterschiedlichen bekannten Merkmalspositionen ($P_{Mi(X, Y, Z)}$) im Raum und den Bildpositionen $P_{Bi(X,Y)}$ in der Bildebene (4) der Kamera (2) ein Lochkameramodell nach Hartley und Zisserman verwendet wird.

11. Verfahren nach einem der Ansprüche 2 bis 10, **dadurch gekennzeichnet, dass** als Korrekturmodell für die geometrische Verzeichnung und/oder die chromatische Aberration ein radial-tangentiales Modell nach Brown-Conrady verwendet wird.

12. Verfahren nach einem der Ansprüche 2 bis 11, **dadurch gekennzeichnet, dass** als Korrekturmodell für die Vignettierung eine radiale Vignettierungsfunktion mit Vignettierungsparametern ($\alpha_i$) und einer Pixelintensität (I) verwendet wird.

13. Verwendung des Verfahrens nach einem der Ansprüche 1 bis 12 zur Korrektur zumindest eines Abbildungsfehlers in einer Bildebene (4) einer Kamera (2) mit einer Anzahl von ausgewählten, den Abbildungsfehler beeinflussenden veränderlichen Kameraeinstellungen, **dadurch gekennzeichnet, dass** bei einer von den zumindest zwei definierten Einstellungsspezifikationen abweichenden Einstellungsspezifikation einer der ausgewählten, den Abbildungsfehler beeinflussenden Kameraeinstellungen die Korrekturparameter des Korrekturmodells zur Korrektur des zumindest einen Abbildungsfehlers bei dieser abweichende Einstellungsspezifikation aus den ermittelten Korrekturparametern der zumindest zwei definierten Einstellungsspezifikationen berechnet werden, **dass** die berechneten Korrekturparameter für die abweichende Einstellungsspezifikation im Korrekturmodell der Kamera (2) zur Korrektur des zumindest einen Abbildungsfehlers bei der abweichenden Einstellungsspezifikation hinterlegt werden **und dass** das Korrekturmodell mit den berechneten hinterlegten Korrekturparametern verwendet wird, um den zumindest einen Abbildungsfehler in der Bildebene (4) der Kamera (2) bei der von den zumindest zwei definierten Einstellungsspezifikationen abweichenden Einstellungsspezifikation zu korrigieren.

14. Verwendung nach Anspruch 13, **dadurch gekennzeichnet, dass** die Korrekturparameter für die abweichende Einstellungsspezifikation mittels einer Hyperbelfunktion und linearer Interpolation oder linearer Regression aus den Korrekturparametern der zumindest zwei definierten Einstellungsspezifikationen berechnet werden.

## Claims

1. Method for the generation of a correction model of a camera (2) to correct at least one aberration influenced by a number of selected, modifiable camera settings in the image plane (4) of the camera (2), wherein a plurality (i) of features ($M_i$) is provided, wherein for each of the selected, modifiable camera settings that influence the aberration, at least two defined setting specifications are provided for the modification of the respective camera setting, wherein for each of the at least two setting specifications the plurality (i) of the features ($M_i$) is captured by the camera, **characterized in that** the plurality (i) of features ($M_i$) is provided with different known feature positions ($P_{MKX,Y,Z}$) in space, that image positions ($P_{Bi(X,Y}$) of the features (Mi) in the image plane (4) are determined by the camera (2) from the captured features (Mi), that at least one known mathematical method is used to determine a relationship between the different known feature positions ($P_{Mi(X,Y,Z}$) in space and the corresponding image positions ($P_{Bi(X,Y)}$) in the image plane (4) of the camera (2), that from that, for each of the at least two provided setting specifications of the selected modifiable camera settings, correction parameters of at least of one specified mathematical correction model are determined for the correction of the at least one aberration and that the at least one correction model is stored in the camera (2) together with the determined correction parameters.

2. Method according to claim 1, **characterized in that** a geometric distortion and/or a chromatic aberration and/or a vignetting are provided as the aberration.

3. Method according to claim 1 or 2, **characterized in that** a focal width and/or a focal distance (F) and/or an aperture (B) and/or a wavelength ($\lambda$) of a light (L) for the illumination of the features (Mi) are provided as the modifiable camera settings that influence the aberration.

4. Method according to any of claims 1 to 3, **characterized in that** an equal camera distance (IK) from the image plane (4) is provided for all features (Mi).

5. Method according to claim 4, **characterized in that** the features (Mi) are arranged on a two-dimensional calibration plate, whereby active or passive, preferably circular features ($M_i$) are provided as features (Mi).

6. Method according to claim 5, **characterized in that** the camera distance (IK) is modified at least twice, wherein at each camera distance (IK) the features (Mi) for each of the at least two provided setting specifications are captured by the camera (2).

7. Method according to any of claims 1 to 3, **characterized in that** at least two features (Mi) with a different camera distance (IK) are provided.

8. Method according to claim 7, **characterized in that** the features (Mi) are arranged on a three-dimensional calibration object (3), whereby active or passive, preferably circular features ($M_i$) are provided as features (Mi).

9. Method according to any of claims 1 to 8, **characterized in that** at least ten, preferably at least twenty, and even more preferably at least thirty features ($M_i$) are provided.

10. Method according to any of claims 1 to 9, **characterized in that,** as the mathematical method for the determination of the relationship between the different known feature positions ($P_{Mi(X,Y,Z)}$) in space and the image positions ($P_{Bi(X,Y)}$) in the image plane (4) of the camera (2), a pinhole camera model according to Hartley and Zisserman is used.

11. Method according to any of claims 2 to 10, **characterized in that,** as the correction model for the geometric distortion and/or the chromatic aberration, a radial-tangential model according to Brown-Conrady is used.

12. Method according to any of claims 2 to 11, **characterized in that,** as the correction model for the vignetting, a radial vignetting function is used with vignetting parameters ($\alpha_i$) and a pixel intensity (I).

13. Use of the method according to any of claims 1 to 12 for the correction of at least one aberration in an image plane (4) of a camera (2) with a plurality of selected camera settings that influence the aberration, **characterized in that** for a setting specification of one of the selected camera settings influencing the aberration, that deviates from the at least two defined setting specifications, the correction parameters of the correction model for the correction of the at least one aberration at this deviating setting specification are calculated from the determined correction parameters of the at least two defined setting specifications, **that** the calculated correction parameters for the deviating setting specification are stored in the correction model of the camera (2) for the correction of the at least one aberration in the deviating setting specification, **and that** the correction model with the calculated, stored correction parameters is used to correct the at least one aberration in the image plane (4) of the camera (2) at the setting specification deviating from the at least two defined setting specifications.

14. Application according to claim 13, **characterized in that** the correction parameters for the deviating setting specification are calculated from the correction parameters of the at least two defined setting specifications by means of a hyperbolic function and linear interpolation or linear regression.

**Revendications**

1. Procédé de génération d'un modèle de correction d'une caméra (2) pour corriger au moins un défaut d'image influencé par un certain nombre de réglages de caméra variables sélectionnés dans un plan d'image (4) de la caméra (2), dans lequel une pluralité (i) de caractéristiques ($M_i$) est prévue, dans lequel au moins deux spécifications de réglage définies pour changer le réglage de caméra respectif sont spécifiées pour chacun des réglages de caméra variables sélectionnés influençant le défaut d'image, dans lequel la pluralité (i) de caractéristiques ($M_i$) est enregistrée pour chacune des au moins deux spécifications de réglages prédéfinies de la caméra (2), **caractérisé en ce que** la pluralité (i) des caractéristiques ($M_i$) avec différentes positions de caractéristiques connues ($P_{Mi(X,Y,Z)}$) est prévue dans l'espace, **en ce que** les positions d'image $P_{Bi(x, y)}$ des caractéristiques (Mi) sont déterminées par la caméra (2) à partir des caractéristiques enregistrées (Mi) dans le plan d'image (4), **en ce qu'**au moyen d'au moins un procédé mathématiquement connu, un rapport entre les différentes positions de caractéristiques connues ($P_{Mi(X, Y, Z)}$) dans l'espace et les positions d'image correspondantes $P_{Bi(x, y)}$ dans le plan d'image (4) de la caméra (2) est déterminé, **en ce qu'**à partir de cela des paramètres de correction d'au moins un modèle de correction mathématique prédéfini pour corriger l'au moins un défaut d'image sont déterminés pour chacun des au moins deux spécifications de réglage prédéfinies des réglages de caméra variables sélectionnés **et en ce que** l'au moins un modèle de correction avec les paramètres de correction déterminés est stocké dans la caméra (2).

2. Procédé selon la revendication 1, **caractérisé en ce qu'**une distorsion géométrique et/ou une aberration chromatique et/ou un vignettage sont prévus comme défaut d'image.

3. Procédé selon la revendication 1 ou 2, **caractérisé en ce que** comme réglages de caméra variables influençant le défaut d'image, une longueur de focale et/ou une distance focale (F) et/ou une ouverture (B) et/ou une longueur d'onde (À) d'une lumière (L) d'un éclairage des caractéristiques ($M_i$) sont prévues.

4. Procédé selon l'une des revendications 1 à 3, **caractérisé en ce qu'**une même distance de caméra (IK) par rapport au plan d'image (4) est prévue pour toutes les caractéristiques (Mi).

5. Procédé selon la revendication 4, **caractérisé en ce que** les caractéristiques (Mi) sont disposées sur une plaque d'étalonnage bidimensionnelle, dans lequel des caractéristiques, actives ou passives, de préférence des caractéristiques circulaires ($M_i$) sont prévues comme caractéristiques (Mi).

6. Procédé selon la revendication 5, **caractérisé en ce que** la distance de caméra (IK) est modifiée au moins deux fois, dans lequel les caractéristiques (Mi) pour chacune des au moins deux spécifications de réglage prédéfinies sont enregistrées par la caméra (2) à chaque distance de caméra (IK) .

7. Procédé selon l'une des revendications 1 à 3, **caractérisé en ce qu'au** moins deux caractéristiques (Mi) avec des distances de caméra différentes (IK) sont prévues.

8. Procédé selon la revendication 7, **caractérisé en ce que** les caractéristiques (Mi) sont disposées sur un objet d'étalonnage tridimensionnel (3), dans lequel des caractéristiques, actives ou passives, de préférence des caractéristiques circulaires ($M_i$) sont prévues comme caractéristiques (Mi).

9. Procédé selon l'une des revendications 1 à 8, **caractérisé en ce qu'au** moins dix, de préférence au moins vingt, de manière particulièrement préférée au moins trente caractéristiques ($M_i$) sont prévues.

10. Procédé selon l'une des revendications 1 à 9, **caractérisé en ce qu'un** modèle de caméra à sténopé selon Hartley et Zisserman est utilisé comme procédé mathématique de détermination du rapport entre les différentes positions de caractéristiques connues ($P_{Mi(x, Y, Z)}$) dans l'espace et les positions d'image $P_{Bi(x, y)}$ dans le plan d'image (4) de la caméra (2).

11. Procédé selon l'une des revendications 2 à 10, **caractérisé en ce qu'**un modèle radial-tangentiel selon Brown-Conrady est utilisé comme modèle de correction de la distorsion géométrique et/ou de l'aberration chromatique.

12. Procédé selon l'une des revendications 2 à 11, **caractérisé en ce qu'**une fonction de vignettage radiale avec des paramètres de vignettage ($\alpha_i$) et une intensité de pixel (I) est utilisée comme modèle de correction pour le vignettage.

13. Utilisation du procédé selon l'une des revendications 1 à 12 pour corriger au moins un défaut d'image dans un plan d'image (4) d'une caméra (2) avec un certain nombre de réglages de caméra variables sélectionnés influençant le défaut d'image, **caractérisée en ce que** pour une spécification de réglage divergeant des au moins deux spécifications de réglage définies d'un des réglages de caméra sélectionné, influençant le défaut d'image, les paramètres de correction du modèle de correction pour la correction de l'au moins un défaut d'image sont calculés pour cette spécification de réglage divergente à partir des paramètres de correction déterminés des au moins deux spécifications de réglage définies, **en ce que** les paramètres de correction calculés pour la spécification de réglage divergente sont enregistrés dans le modèle de correction de la caméra (2) pour la correction de l'au moins un défaut d'image dans la spécification de réglage divergente **et en ce que** le modèle de correction avec les paramètres de correction enregistrés calculés est utilisé pour corriger l'au moins un défaut d'image dans le plan d'image (4) de la caméra (2) pour la spécification de réglage divergeant des au moins deux spécifications de réglage définies.

14. Utilisation selon la revendication 13, **caractérisée en ce que** les paramètres de correction pour la spécification de réglage divergente sont calculés au moyen d'une fonction hyperbolique et d'une interpolation linéaire ou d'une régression linéaire à partir des paramètres de correction des au moins deux spécifications de réglage définies.

Fig. 1

EP 3 557 523 B1

Fig. 2

Fig. 3b

Fig. 3a

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20170070731 A1

- WO 2018050223 A1

**In der Beschreibung aufgeführte Nicht-Patentliteratur**

- **R. HARTLEY ; A. ZISSERMAN.** Multiple View Geometry in Computer Vision. Cambridge University Press, 2003

- Evaluation of correction methods of chromatic aberration in digital camera images. **RYUJI MATSUOKA ; KAZUYOSHI ASONUMA ; GENKI TAKAHASHI ; TAKUYA DANJO ; KAYOKO HIRANA.** ISPRS Photogrammetric image analysis. 2012, vol. 3, 25